**Europäisches Patentamt**

**European Patent Office**

**Office européen des brevets**

(19)

(11) Veröffentlichungsnummer: **0 306 761**
**B1**

(12)

# EUROPÄISCHE PATENTSCHRIFT

(45) Veröffentlichungstag der Patentschrift:
**13.06.90**

(51) Int. Cl.⁵: **F16D 41/07**

(21) Anmeldenummer: **88113646.9**

(22) Anmeldetag: **23.08.88**

(54) **Freilaufkupplung mit Klemmkörpern.**

(30) Priorität: **04.09.87 DE 3729632**

(43) Veröffentlichungstag der Anmeldung:
**15.03.89 Patentblatt 89/11**

(45) Bekanntmachung des Hinweises auf die Patenterteilung:
**13.06.90 Patentblatt 90/24**

(84) Benannte Vertragsstaaten:
**DE ES FR GB IT**

(56) Entgegenhaltungen:
**DE-A- 2 236 977**
**DE-B- 1 142 254**
**FR-A- 2 601 735**
**GB-A- 2 130 312**
**US-A- 2 630 896**
**US-A- 2 835 363**
**US-A- 3 087 588**
**US-A- 3 863 742**

(73) Patentinhaber: **INA Wälzlager Schaeffler KG,
Industriestrasse 1-3 Postfach 1220,
D-8522 Herzogenaurach(DE)**

(72) Erfinder: **Hartig, Günter, Dipl.-Ing. (FH),
Kirschgartenstrasse 79, D-8500 Nürnberg(DE)**

(74) Vertreter: **Klug, Horst, Dipl.-Ing. (FH), c/o INA Wälzlager
Schaeffler KG Postfach 12 20,
D-8522 Herzogenaurach(DE)**

EP 0 306 761 B1

ACTORUM AG

## Beschreibung

Die Erfindung betrifft eine Freilaufkupplung mit Klemmkörpern, die in ebene Randflächen aufweisende Taschen eines einteiligen Einzelkäfigs von je einem Anfederungselement unverlierbar gehalten sind, welches einen axialen neben dem Klemmkörper liegenden Federabschnitt, einen den Klemmkörper im Einkoppelsinne mit Federkraft beaufschlagenden Fortsatz des Federabschnitts und einen sich am Einzelkäfig abstützenden Haltebereich aufweist.

Eine derartige Freilaufkupplung ist in der DE-AS 1 915 567 beschrieben. Die Anfederungselemente nach der DE-AS 1 915 567 sind von Wickelfedern aus Drahtmaterial gebildet. Diese Wickelfedern sind lose auf Nasen des Käfigs gesteckt, die in die Taschen hineinragen. Die Wickelfeder beansprucht damit Bauraum innerhalb der Tasche. Die größte axiale Länge der Tasche ist damit vom Klemmkörper nicht voll ausnutzbar.

Die Montage der Wickelfedern an dem Käfig ist umständlich. Denn die Wickelfeder muß ausgerichtet zu der Nase geführt und sodann auf diese aufgesteckt werden. Eine maschinelle Montage ist auch dadurch erschwert, daß die Wickelfedern am Käfig nicht unverlierbar gehalten sind, solange nicht die Klemmkörper in die Taschen eingesetzt sind.

In der DE-AS 20 27 763 ist ein Freilauf mit Klemmkörpern beschrieben, bei dem die Anfederungselemente von Blattfedern gebildet sind. Diese Blattfedern liegen in Umfangsrichtung zwischen den Klemmkörpern und sind mittels Schnappgliedern zwischen den Klemmkörpern am Käfig gehalten. Diese Anordnung der Anfederungselemente begrenzt die Ausnutzung des Bauraums durch die Klemmkörper in Umfangsrichtung.

Aufgabe der Erfindung ist es, eine Freilaufkupplung der eingangs genannten Art vorzuschlagen, bei der die Montage der Anfederungselemente und der Klemmkörper vereinfacht ist und bei der die Anfederungselemente so angeordnet sind, daß die Klemmkörper den Bauraum axial und in Umfangsrichtung weitgehend ausnutzen können.

Erfindungsgemäß ist obige Aufgabe bei einer Freilaufkupplung der eingangs genannten Art dadurch gelöst, daß das Anfederungselement aus Flachmaterial besteht und der Federabschnitt von mindestens einer Biegung des Flachmaterials gebildet ist, daß die Biegung im Raum zwischen derjenigen radialen Ebene, in der die stirnseitige Außenfläche des Einzelkäfigs liegt, und derjenigen radialen Ebene verläuft, in der die dieser Außenfläche nahen Ränder der Taschen mit der größten axialen lichten Weite liegen, und daß der Haltebereich an dem Einzelkäfig selbsthaltend festgelegt ist.

Bei der Montage ist das Anfederungselement aus Flachmaterial auch maschinell leicht hantierbar. Nach dem Einsetzen in den Käfig ist das Anfederungselement auch schon vor dem Einsetzen der Klemmkörper unverlierbar an dem Käfig gehalten. Dies erleichtert die Montage beträchtlich.

Die den Federabschnitt bildende Biegung liegt außerhalb der Tasche, axial neben dem Klemmkörper und radial neben dem Rand des Käfigs, also in einem Bereich, den der Klemmkörper ohnehin nicht einnehmen kann. Dadurch ist im Bedarfsfalle eine weitestgehende Bauraumausnutzung durch die Klemmkörper möglich. Die Klemmkörper können also in Umfangsrichtung nahe beieinander angeordnet werden, da der Federabschnitt des Anfederungselements nicht zwischen Ihnen verläuft. In axialer Richtung können die Klemmkörper die maximale lichte Weite der Tasche ausnutzen.

Vorteilhafte Ausgestaltungen der Erfindung ergeben sich aus den Unteransprüchen und der folgenden Beschreibung von Ausführungsbeispielen. In der Zeichnung zeigen:

Figur 1 eine Teilansicht eines einteiligen Einzelkäfigs mit einem Anfederungselement ohne Klemmkörper,

Figur 2 eine Teilansicht des Einzelkäfigs mit eingesetztem Klemmkörper,

Figur 3 eine Ansicht eines Anfederungselements,

Figur 4 eine Variante des Anfederungselements,

Figur 5 eine weitere Variante des Anfederungselements,

Figur 6 ein Doppel-Anfederungselement,

Figur 7 eine Teilansicht der Freilaufkupplung in eingebautem Zustand,

Figur 8 eine Teilansicht der Freilaufkupplung im nicht eingebautem Zustand, wobei die Anfederungselemente auf die Klemmkörper drücken,

Figur 9 eine Ansicht längs der Linie IX-IX nach Figur 8,

Figur 10 eine Ansicht entsprechend Figur 8, wobei die Anfederungselemente durch Zug auf die Klemmkörper wirken,

Figur 11 eine Ansicht eines Anfederungselements nach

Figur 10,

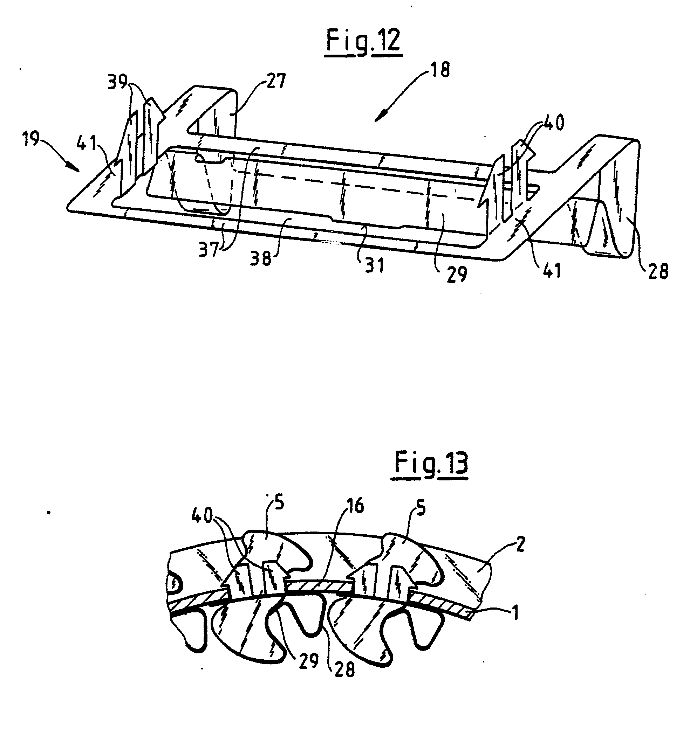

Figur 12 ein weiteres Ausführungsbeispiel eines Anfederungselements und

Figur 13 eine Teilansicht einer Freilaufkupplung mit einem Anfederungselement nach Figur 12.

Ein Einzelkäfig (l) weist Borde (2,3) auf. Er ist mit Taschen (4) zur Aufnahme von Klemmkörpern (5) versehen. Die Taschen (4) sind von ebenen Randflächen (6,7) und stirnseitigen Rändern (8,9) begrenzt. Zwischen den stirnseitigen Rändern (8,9) besteht die größte axiale lichte Weite (L).

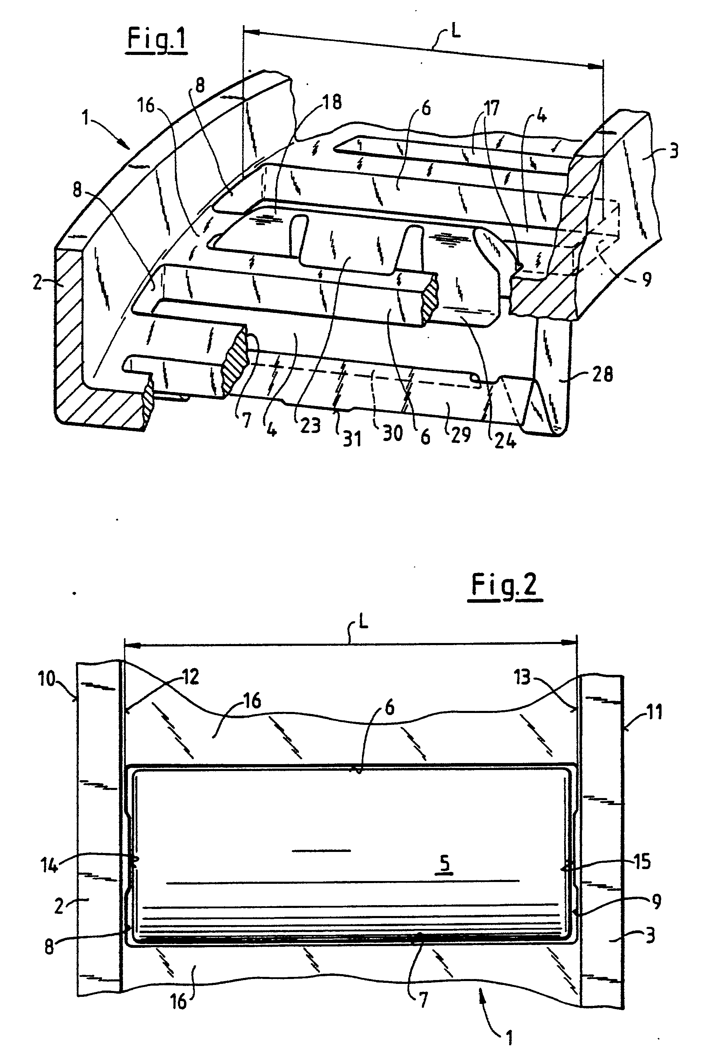

Die stirnseitige Außenfläche des einen Bordes (2) und damit des Einzelkäfigs (1) liegt in einer radialen Ebene (10). Die andere stirnseitige Außenfläche des Einzelkäfigs (1) und damit des Bordes (3) liegt in einer radialen Ebene (11). Die stirnseitigen Ränder (8) der Taschen (4) verlaufen im Bereich der größten axialen lichten Weite (L) in einer radialen Ebene (12). Die stirnseitigen Ränder (9) liegen entsprechend an einer radialen Ebene (13). Beim Ausführungsbeispiel nach Figur 2 sind an den Rändern (8) geringfügig in die Taschen (4) vorstehende Anlageflächen (14) ausgeformt. Entsprechende Anlageflächen (15) sind an den Rändern (9) angeformt.

Der Einzelkäfig (1) ist beispielsweise aus Flachmaterial gestanzt, gerollt und verschweißt.

Zwischen den Taschen (4) verlaufen Stege (16). In diesen sind axiale Schlitze (17) vorgesehen, welche die Stege (16) so unterbrechen, daß sie beim Herstellungsschritt des Rollens eine entsprechende Biegung annehmen, d.h. der Käfig keine Polygonform annimmt.

Jedem Klemmkörper (5) ist ein Anfederungselement (18) zugeordnet. Das Anfederungselement (18) ist aus federelastischem Flachmaterial gebogen. Es weist einen Haltebereich (19), einen an diesen anschließenden Federabschnitt (20) und einen Fortsatz (21) auf, der den Klemmkörper (5) im Einkoppelsinne mit der vom Federabschnitt (20) herrührenden Federkraft beaufschlagt.

Bei den Ausführungsbeispielen nach den Figuren 1 bis 11 ist der Haltebereich (19) von einer U-förmigen Lasche (22) gebildet, an der eine Zunge (23) ausgeformt ist. An einem Schenkel ist die Lasche (22) mit einer Abwinklung (24) versehen. Ein Schenkel der Lasche (22) ist über einen Steg (25) mit dem Federabschnitt (20) verbunden. Die Lasche (22) ist praktisch ebenso lang wie der Schlitz (17). Dadurch wird die axiale Fixierung des Anfederungselements (18) im Schlitz (17) gewährleistet. Um das Einführen der Lasche (22) in den Schlitz (17) zu erleichtern, ist diese mit Schrägen (26) versehen.

Das Anfederungselement (18) läßt sich auf einfache Weise an dem Einzelkäfig (1) festlegen. Es wird hierfür in den Käfig (I) axial eingeschoben und dann radial in den Schlitz (17) gesteckt, bis die Abwinklung (24) und der Steg (25) innenseitig am Steg (16) anliegen. Die Zunge (23) schnappt dabei außen auf den Steg (16). Eine gewisse Federkraft der Lasche (22) verbessert den Sitz. Die Anfederungselemente sind somit selbsthaltend am Einzelkäfig (1) auch dann festgelegt, wenn die Klemmkörper (5) noch nicht eingesetzt sind. Nach dem Einschnappen der Anfederungselemente (18) in die Schlitze (17) werden die Klemmkörper (5) in die Taschen (4) eingeschoben, wobei die Klemmkörper (5) dann so an den Fortsätzen (21) anliegen, daß sie im Einkopplungssinne von der Federkraft der Federabschnitte (20) beaufschlagt sind.

Der Federabschnitt (20) ist von einer V-förmigen Biegung (27,28) gebildet. Die Biegung (27) liegt im Raum zwischen der radialen Ebene (10) und der radialen Ebene (12). Die Biegung (28) liegt im Raum zwischen der radialen Ebene (11) und der radialen Ebene (13). Damit liegen die Biegungen (27,28) neben den Klemmkörpern (5). Sie begrenzen also die mögliche axiale Länge der Klemmkörper nicht. Dies ist günstig, wenn die Klemmkörper (5) zur übertragung hoher Kräfte den Einzelkäfig (1) möglichst weitgehend ausfüllen sollen. Da die federwirksamen Biegungen (27,28) auch nicht zwischen benachbarten Klemmkörpern (5) angeordnet sind, ist auch in Umfangsrichtung gesehen eine weitestgehende Ausnutzung des Bauraums des Einzelkäfigs (1) möglich.

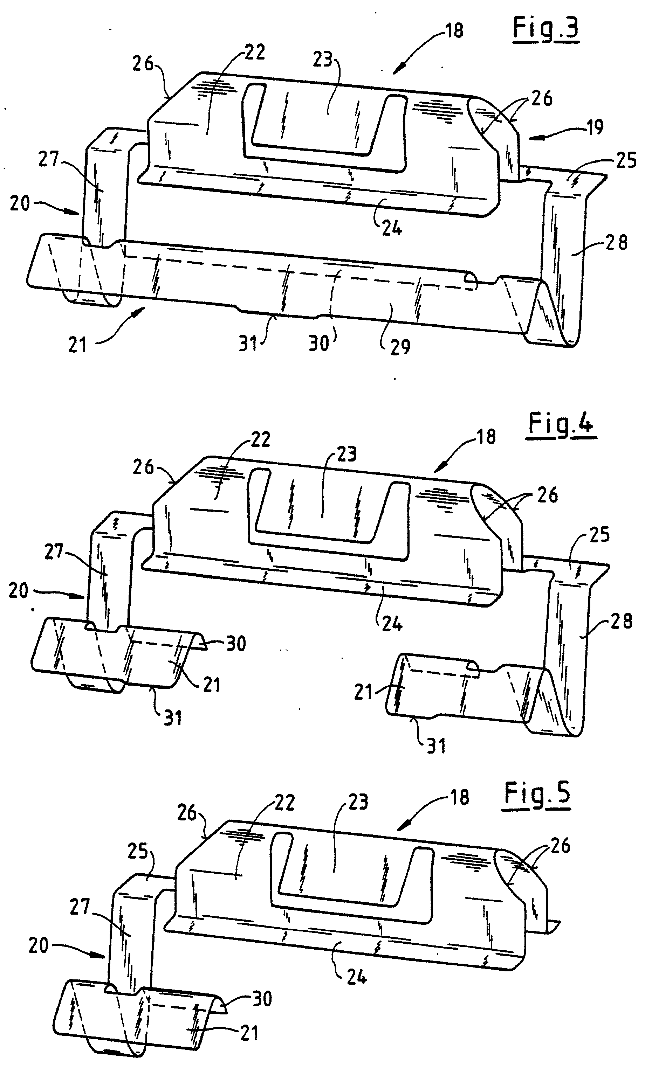

Beim Ausführungsbeispiel nach den Figuren 1 und 3 sind die Fortsätze (21) der Biegungen (27,28) von einem durchgehenden Quersteg (29) gebildet, der mit einer Rippe (30) versteift ist und mittig einen Vorsprung (31) zur Anlage an dem Klemmkörper (5) aufweist.

Beim Ausführungsbeispiel nach Figur 4 sind die Fortsätze (21) der Biegungen (27,28) getrennt. Beim Ausführungsbeispiel nach Figur 5 ist eine federwirksame Biegung nur einseitig vorgesehen.

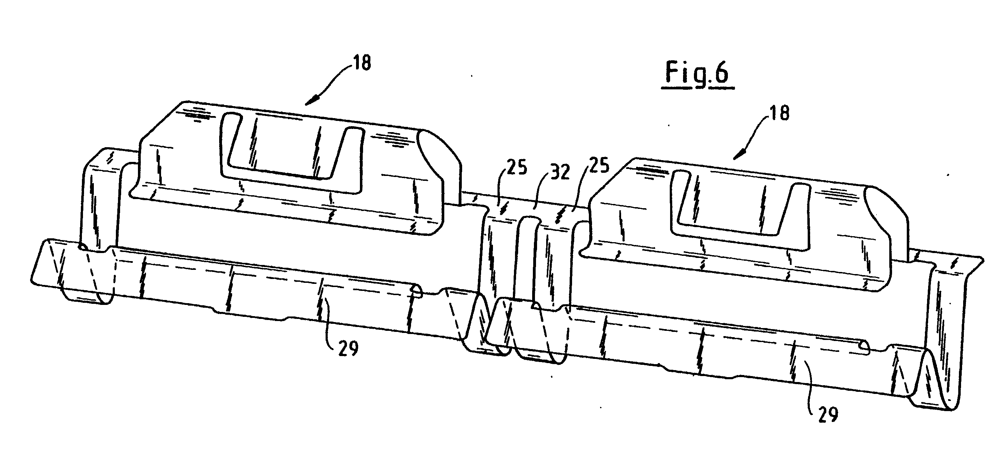

In Figur 6 ist ein Doppel-Anfederungselement dargestellt, das aus zwei Anfederungselementen (18) entsprechend Figur 3 besteht, die über eine Anbindung (32) miteinander verbunden sind. Dieses Doppel-Anfederungselement wird bei einem Einzelkäfig mit zwei Kränzen von Klemmkörpern verwendet. Entsprechend könnte auch ein Mehrfach-Anfederungselement aufgebaut sein.

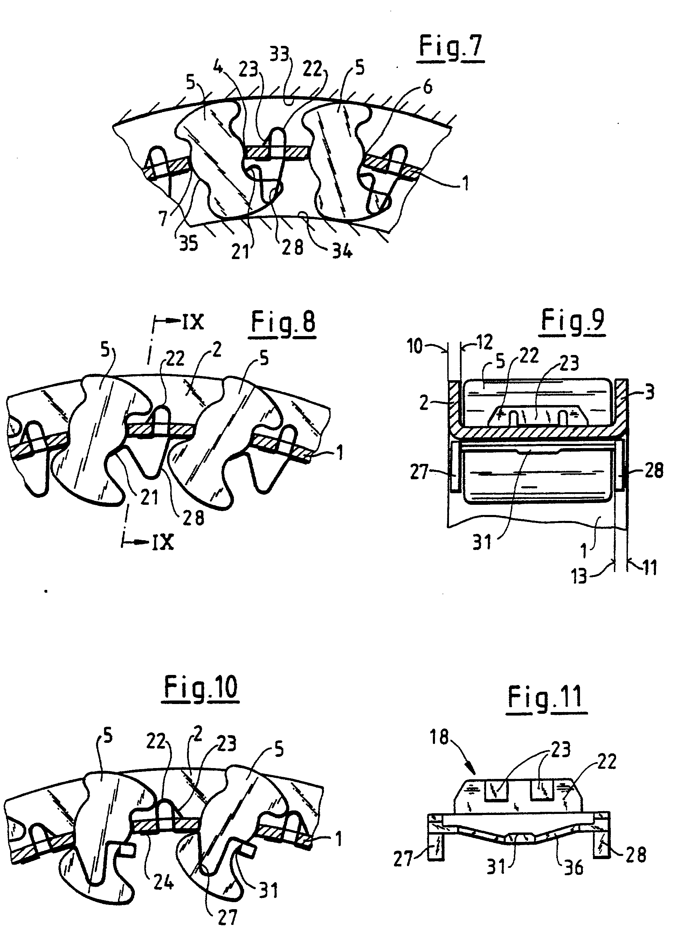

In Figur 7 ist der Einzelkäfig (1) im zwischen zwei Laufflächen (33,34) eingebauten Zustand dargestellt. Die Anfederungselemente (18) drücken mit ihren Fortsätzen (21) im Einkoppelsinne auf die Klemmkörper (5). Die Klemmkörper (5) sind Vollkörper ohne Schlitze, Bohrungen oder Lagerzapfen. Sie sind mit einer Verdickung (35) in der Tasche (4) gelagert. Der Fortsatz (21) drückt so auf den Klemmkörper (5), daß sich die Verdickung (35) an der in Umfangsrichtung gesehen gegenüberliegenden Randfläche (7) des Einzelkäfigs (1) abstützt.

In Figur 8 und 9 ist der Einzelkäfig (1) im nicht zwischen Laufflächen eingebauten Zustand gezeigt. Mittels der auf die Klemmkörper (5) drückenden Anfederungselemente (18) sind die Klemmkörper (5) entsprechend verschwenkt und dadurch unverlierbar gehalten. Die Biegungen (27,28) liegen zwischen den radialen Ebenen (10,12 bzw. 11,13) (vgl. Figur 9) und dort zwischen den Klemmkörpern (5) (vgl. Figur 8).

In den Figuren 10 und 11 ist ein Anfederungselement (18) gezeigt, das den ihm zugeordneten Klemmkörper (5) umgreift. Der Quersteg (29) wirkt hier auf Zug auf den Klemmkörper (5). Der Quersteg weist eine Durchbiegung (36) auf. An ihm ist mittig der Vorsprung (31) vorgesehen, der am Klemmkörper (5) anliegt. Es ist dadurch eine Selbstausrichtung des Klemmkörpers (5) erreicht.

Bei den bisher beschriebenen Ausführungsbeispielen ist der Haltebereich (19) an dem Schlitz (17) befestigt. Weist der Einzelkäfig (1) die Schlitze (17) nicht auf, dann kann ein Anfederungselement (18) nach den Figuren 12 und 13 verwendet werden. Der Haltebereich (19) dieses Anfederungselements (18) bildet einen geschlossenen Rahmen (37), dessen Öffnung (38) im an dem Einzelkäfig (1) festgelegten Zustand mit der Tasche (4) fluchtet (vgl. Figur 13). Am Rahmen (37) sind beidseitig Doppelhaken (39,40) ausgebildet.

Das Anfederungselement (18) wird mit dem Doppelhaken (39,40) durch betreffende Tasche (4) gedrückt. Der Rahmen (37) liegt dann an der Innenseite der Stege (16) in der Umgebung der Tasche (4) an. Die Doppelhaken (39,40) übergreifen die Stege (16) oben. Das Einschnappen der flächigen Doppelhaken (39,40) ist durch die Federelastizität in den Bereichen (41) des Rahmens (37) möglich. Nach dem Einschnappen der Anfederungselemente (18) werden die Klemmkörper (5) in die Taschen (4) eingesetzt. Sie sind dann durch den Quersteg (29) unverlierbar gehalten.

Der Federabschnitt (27 bzw. 28) muß nicht von nur einer Biegung des Flachmaterials gebildet sein.

Er kann auch mehrere Biegungen aufweisen, so daß er beispielsweise W-oder Z-förmige Gestalt hat.

Es ist auch möglich, den Käfig (1) und die Anfederungselemente (18) gemeinsam einstückig aus Kunststoff herzustellen.

## Patentansprüche

1. Freilaufkupplung mit Klemmkörpern (5), die in ebene Randflächen aufweisende Taschen (4) eines einteiligen Einzelkäfigs (1) von je einem Anfederungselement (18) unverlierbar gehalten sind, welches einen axial neben dem Klemmkörper (5) liegenden Federabschnitt (20), einen den Klemmkörper (5) im Einkoppelsinne mit Federkraft beaufschlagenden Fortsatz (21) des Federabschnitts und einen sich am Einzelkäfig (1) abstützenden Haltebereich (19) aufweist, dadurch gekennzeichnet, daß das Anfederungselement (18) aus Flachmaterial besteht und der Federabschnitt (20) von mindestens einer Biegung (27, 28) des Flachmaterials gebildet ist, daß die Biegung (27, 28) im Raum zwischen derjenigen radialen Ebene (10, bzw. 11), in der die stirnseitige Außenfläche des Einzelkäfigs (1) liegt, und derjenigen radialen Ebene (12 bzw. 13) verläuft, in der die dieser Außenfläche nahen Ränder (8 bzw. 9) der Taschen (4) mit der größten axialen lichten Weite (L) liegen, und daß der Haltebereich (19) an dem Einzelkäfig (1) selbsthaltend festgelegt ist.

2. Freilaufkupplung nach Anspruch 1, dadurch gekennzeichnet, daß am Anfederungselement (18) beidseitig mindestens eine Biegung (27, 28) als Federabschnitt (20) vorgesehen ist.

3. Freilaufkupplung nach Anspruch 2, dadurch gekennzeichnet, daß die Fortsätze (21) der beidseitigen Biegungen (27, 28) durch einen Quersteg (29) verbunden sind.

4. Freilaufkupplung nach Anspruch 3, dadurch gekennzeichnet, daß am Quersteg (29) eine Rippe (30) zu dessen Versteifung ausgeformt ist.

5. Freilaufkupplung nach Anspruch 3 oder 4, dadurch gekennzeichnet, daß am Quersteg (29) mittig ein Vorsprung (31) als Anlage des Klemmkörpers (5) ausgebildet ist.

6. Freilaufkupplung nach einem der vorhergehenden Ansprüche 3 bis 5, dadurch gekennzeichnet, daß der Quersteg (29) eine Durchbiegung (36) aufweist.

7. Freilaufkupplung nach einem der vorhergehenden Ansprüche, dadurch gekennzeichnet, daß wenigstens zwei Anfederungselemente (18) mittels Anbindungen (32) ein einstückiges Mehrfach-Anfederungselement bilden.

8. Freilaufkupplung nach einem der vorhergehenden Ansprüche, dadurch gekennzeichnet, daß der Haltebereich (19) an dem Einzelkäfig (1) mittels einer Schnappverbindung festgelegt ist.

9. Freilaufkupplung nach Anspruch 8, dadurch gekennzeichnet, daß der Haltebereich (19) eine gebogene Lasche (22) aufweist, welche in einen zwischen benachbarten Taschen (4) verlaufenden Schlitz (17) eingesteckt ist.

10. Freilaufkupplung nach Anspruch 9, dadurch gekennzeichnet, daß an der Lasche (22) eine Abwinklung (24) und eine federnde Zunge (23) vorgesehen sind, die einen Steg (16) des Einzelkäfigs (1) formschlüssig umgreifen.

11. Freilaufkupplung nach einem der vorhergehenden Ansprüche, dadurch gekennzeichnet, daß die Lasche (22) Schrägen (26) aufweist.

12. Freilaufkupplung nach einem der vorhergehenden Ansprüche, dadurch gekennzeichnet, daß die Lasche (22) über einen Steg (25) an die Biegung (27,28) angebunden ist.

13. Freilaufkupplung nach einem der vorhergehenden Ansprüche 1 bis 8, dadurch gekennzeichnet, daß der Haltebereich einen Rahmen (37) aufweist, dessen Öffnung (38) mit den Rändern (6 bis 9) der Tasche (4) fluchtet, und daß am Rahmen (37) Haken (39,40) ausgebildet sind, die die zwischen den Taschen (4) liegenden Stege (16) übergreifen.

14. Freilaufkupplung nach einem der vorhergehenden Ansprüche, dadurch gekennzeichnet, daß die Biegung (27,28) über den Fortsatz (31) an dem Klemmkörper zieht.

15. Freilaufkupplung nach einem der vorhergehenden Ansprüche 1 bis 13, dadurch gekennzeichnet, daß die Biegung (27,28) über den Fortsatz (21) auf den Klemmkörper drückt.

## Revendications

1. Embrayage à roue libre à corps de serrage (5) maintenus de façon imperdable, chacun par un élément de suspension (18), dans des poches (4) à faces latérales planes d'une cage unique (1) faite d'une seule pièce, lequel élément de suspension (18) comprend un segment de ressort axial 20 situé à côté du corps de serrage 5, un prolongement (21) du segment de ressort appliquant une force de ressort au corps de serrage (5) dans le sens d'accouplement et une zone de retenue (19) s'appuyant contre la cage unique (1), caractérisé en ce que l'élément de suspension (18) est fait en une matière plate et le segment de ressort (20) est formé d'au moins une courbure (27, 28) de la matière plate, en ce que la courbure (27, 28) s'étend dans l'espace compris entre le plan radial (10, 11 respectivement) dans lequel est située la face frontale extérieure de la cage unique (1) et le plan radial (12, 13 respectivement) dans lequel sont situés les bords (8, 9 respectivement) des poches (4) voisins de cette face extérieure et comprenant entre eux la plus grande largeur axiale libre (L), et en ce que la zone de retenue (19) est appliquée sur la cage unique (1) par auto-accrochage.

2. Embrayage à roue libre selon la revendication 1, caractérisé en ce qu'au moins une courbure (27, 28) est prévue en tant que segment de ressort (20) sur les deux côtés de l'élément de suspension (18).

3. Embrayage à roue libre selon la revendication 2, caractérisé en ce que les prolongements (21) des courbures (27, 28) des deux côtés, sont reliés l'un à l'autre par une traverse (29).

4. Embrayage à roue libre selon la revendication 3, caractérisé en ce qu'une nervure (30) est formée sur la traverse (29) pour la raidir.

5. Embrayage à roue libre selon la revendication 3 ou 4, caractérisé en ce qu'au centre de la traverse (29) est formée une saillie (31) qui sert de contact avec le corps de serrage (5).

6. Embrayage à roue libre selon l'une des revendications 3 à 5 précédentes, caractérisé en ce que la traverse (29) comprend une flèche (36).

7. Embrayage à roue libre selon l'une des revendications précédentes, caractérisé en ce qu'au moins deux éléments de suspension (18) forment, au moyen des raccords (32), un élément de suspension multiple en une seule pièce.

8. Embrayage à roue libre selon l'une des revendications précédentes, caractérisé en ce que la zone de retenue (19) est fixée à la cage unique (1) par un assemblage à enclenchement.

9. Embrayage à roue libre selon la revendication 8, caractérisé en ce que la zone de retenue (19) comprend une éclisse cintrée (22) qui est insérée dans une fente (17) s'étendant entre des poches voisines (4).

10. Embrayage à roue libre selon la revendication 9, caractérisé en ce qu'une partie angulaire (24) et une languette élastique (23) qui s'engagent par concordance de forme autour d'une entretoise (16) de la cage unique (1), sont prévues sur l'éclisse (22).

11. Embrayage à roue libre selon l'une des revendications précédentes, caractérisé en ce que l'éclisse (22) comporte des chanfreins (26).

12. Embrayage à roue libre selon l'une des revendications précédentes, caractérisé en ce que l'éclisse (22) est raccordée à la courbure (27, 28) par une entretoise (25).

13. Embrayage à roue libre selon l'une des revendications 1 à 8 précédentes, caractérisé en ce que la zone de retenue comprend un cadre (37) dont l'ouverture (38) est en alignement avec les bords (6 à 9) des poches (4) et en ce que sur le cadre (37), sont formés des crochets (39, 40) qui s'engagent sur les entretoises (16) situées entre les poches (4).

14. Embrayage à roue libre selon l'une des revendications précédentes, caractérisé en ce que la courbure (27, 28) tire sur le corps de serrage par l'intermédiaire de la saillie (31).

15. Embrayage à roue libre selon l'une des revendications 1 à 13 précédentes, caractérisé en ce que la courbure (27, 28) pousse contre le corps de serrage par l'intermédiaire du prolongement (21).

**Claims**

1. Overrunning clutch with clamping elements (5) retained secure against loss, each one by a spring element (18), in pockets (4) with plane edge surfaces in a one-piece single-cage (1), the spring element (18) being made up of an axial spring section (20) situated next to the clamping element (5), a prolongation (21) of the spring section, by which spring force is applied to the clamping element (5) in the coupling direction and a retaining region (19) bearing against the single-cage (1), characterized in that the spring element (18) is made of flat material and the spring section (20) is formed by at least one bend (27, 28) of the flat material, that the bend (27, 28) extends in the space between the radial plane (10 or 11 as the case may be) in which the end outer surface of the single-cage (1) is situated and the radial plane (12 or 13 as the case may be) in which the edges (8 or 9 as the case may be) of the pockets (4) near this outer surface and having the largest clear axial width (L) are situated, and that the retaining region (19) is fixed to the single-cage (1) by self-retention.

2. Overrunning clutch according to Claim 1, characterized in that on both sides of the spring element (18), at least one bend (27, 28) forming the spring section (20) is provided.

3. Overrunning clutch according to Claim 2, characterized in that the prolongations (21) of the bends (27, 28) situated on both sides are connected by a cross-bar (29).

4. Overrunning clutch according to Claim 3, characterized in that a rib (30) is formed out of the cross-bar (29) to stiffen it.

5. Overrunning clutch according to Claim 3 or 4, characterized in that at the centre of the cross-bar (29) a projection (31) is provided to form a bearing part for the clamping element (5).

6. Overrunning clutch according to one of the preceding Claims 3 to 5, characterized in that the cross-bar (29) is provided with a dip (36).

7. Overrunning clutch according to one of the preceding claims, characterized in that at least two spring elements (18) form a one-piece multiple spring element by means of connecting parts (32).

8. Overrunning clutch according to one of the preceding claims, characterized in that the retaining region (19) is fixed at the single-cage (1) by means of a snap connection.

9. Overrunning clutch according to Claim 8, characterized in that the retaining region (19) is provided with a bent clip (22) which is inserted into a slot (17) extending between adjacent pockets (4).

10. Overrunning clutch according to Claim 9, characterized in that on the clip (22), an angled section (24) and a resilient tongue (23) are provided which interlock with a web (16) of the single-cage (1).

11. Overrunning clutch according to one of the preceding claims, characterized in that the clip (22) is provided with bevels (26).

12. Overrunning clutch according to one of the preceding claims, characterized in that the clip (22) is connected to the bend (27, 28) by a web (25).

13. Overrunning clutch according to one of the preceding claims, characterized in that the retaining region is provided with a frame (37) whose opening (38) is flush with the edges (6 to 9) of the pocket (4) and that hooks (39, 40) are formed on the frame (37) and engage over the webs (16) situated between the pockets (4).

14. Overrunning clutch according to one of the preceding claims, characterized in that the bend (27, 28) pulls on the clamping element via the projection (31).

15. Overrunning clutch according to one of the preceding Claims 1 to 13, characterized in that the bend (27, 28) presses against the clamping element via the prolongation (21).

Fig.1

Fig.2

_Fig.3_

_Fig.4_

_Fig.5_

18

**Fig.6**

18

25  32  25

29

29

EP 0 306 761 B1

Fig.7

Fig.8

Fig.9

Fig.10

Fig.11

## Fig.12

## Fig.13